# EUROPEAN PATENT APPLICATION

(11) **EP 1 916 407 A2**
(43) Date of publication of application: **30.04.2008**
(21) Application number: 07254190.7
(22) Date of filing: 23.10.2007
(51) Int. Cl.: F02K 7/10, F02K 7/14

(54) **Scramjet/ramjet engine with annular isolator**

(30) Priority: 25.10.2006 US 586074
(71) Applicant: United Technologies Corporation, Hartford, CT 06101 (US)
(72) Inventor: Follett, William W., Calabasas, CA 91302 (US); Morrison, Calvin Q., Thousand Oaks, CA 91362-2014 (US); Goldman, Allen Lewis, Thousand Oaks, CA 91360-2891 (US); Edelman, Raymond B., Woodland Hills, CA 91364 (US)
(74) Representative: Leckey, David Herbert

(57) **Abstract**

A dual mode scramjet engine (20) has an isolator (24) that serves to minimize combustor influence on inlet operation, a combustor (26) for operation in both ramjet and scramjet mode, and a centerbody (30) positioned within the isolator (24). The centerbody (30) has an end at an entrance to the combustor (26).

## Description

### BACKGROUND

### (1) Field of the Invention

The present invention relates to an annular isolator dual mode scramjet engine for use in propelling a vehicle.

### (2) Prior Art

Dual mode scramjet (supersonic combustion ramjet) engines typically provide propulsion for high speed vehicles flying from approximately Mach 2 up to Mach 14+. High speed scramjet powered vehicles are typically designed to have long ranges, up to and including orbital space access. To achieve these long ranges, fuel weight becomes a large fraction of the total vehicle weight. As a result, even small improvements in thrust, weight or fuel efficiency can have significant improvements in overall vehicle performance.

Recent research in scramjet engines has focused on axisymmetric (round) cross sections for the isolator and combustor engine components. Axisymmetric cross sections are very efficient from a structural viewpoint, since they are significantly lighter for a given length compared to rectangular cross sections for the same flow area. Axisymmetric isolators may also provide better isolator performance during ramjet mode, due to elimination of weak boundary layer flow present in the corners of a rectangular cross section. This enables the inlet to perform in a started mode across a wider Mach number range, resulting in more efficient operation.

A dual mode scramjet engine is an engine that can operate in both ramjet and scramjet modes. A ramjet engine uses the momentum of the flow to compress air within the inlet, without the use of moving parts such as rotating compressors or fans. The flow is slowed down to subsonic speeds for burning in the combustor. A scramjet engine is similar to a ramjet engine except that the flow is not slowed to subsonic speeds. As a result, the flow in the combustor remains at supersonic speeds.

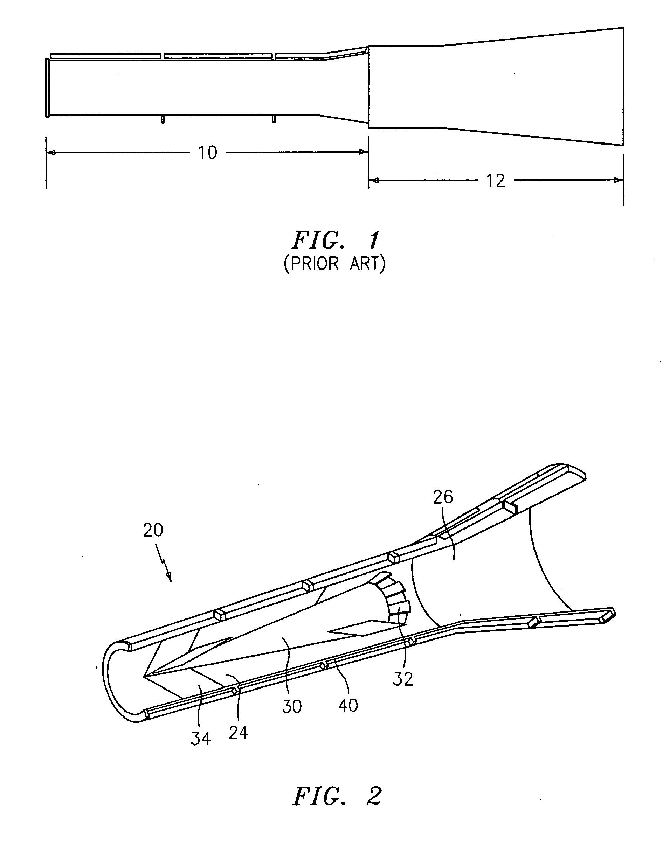

In the prior art, there are axisymmetric or annular, scramjet configurations. This includes an annular scramjet configuration that uses a centerbody throughout the length of the engine. See U.S. Patent No. 6,293,091 to Seymour et al. In U.S. Patent No. 6,164,596 to Kothari, there is included an example of a dual mode scramjet engine with an annular shape throughout the length of the engine including inlet and nozzle conical spikes. Other prior art in the literature includes circular cross section engines without a centerbody. An example of such an engine concept is shown in FIG. 1 where both the isolator 10 and the combustor 12 are circular in cross section.

Other prior art engines include numerous examples of rectangular cross section scramjets. These are shown in U.S. Patent Nos. 5,086,048 to Kutschenreuter, 5,214,914 to Billig, and 3,777,487 to Norman et al.

A new scramjet engine architecture is needed to reduce length to provide more compact propulsion options; reduce development costs by creating a single engine architecture that can be scaled across a large range of thrust requirements; and extend vehicle range through reduced engine weight and improved thrust/weight ratio. Improvements in the state of the art for scramjets are needed to enable future mission capabilities including high speed, long range flights (thousands of miles at speeds of Mach 6 and beyond) and orbital access. Scramjet performance improvements are expected to benefit the vehicle in terms of maximum Mach number, range, payload, and operational cost.

### SUMMARY OF THE INVENTION

There is disclosed herein a dual mode scramjet engine which has (1) a compact flowpath (25% reduction in isolator/combustor length) which contributes to reduced vehicle volume and weight through more efficient packaging; (2) excellent scalability enabling tuning of the mixing scales across a broad range of engine sizes; (3) enhanced flameholding for low speed operability; and (4) reduced combustor heat load which can lead to higher Mach number and range when using hydrocarbon fuels.

In accordance with the present invention, there is provided a dual mode scramjet engine. The dual mode scramjet engine broadly comprises an isolator that serves to minimize combustor influence on inlet operation, a combustor having for operation in both scramjet and scramjet mode, and a centerbody positioned within the isolator, which centerbody has an end at an entrance to the combustor.

Other details of the annular isolator dual mode scramjet engine of the present invention, as well as other advantages attendant thereto are set forth in the following detailed description and the accompanying drawings wherein like reference numerals depict like elements.

### BRIEF DESCRIPTION OF THE DRAWINGS

FIG. 1 is a schematic representation of a prior art scramjet engine having circular cross sections for the isolator and combustor sections;
FIG. 2 is a perspective cut away view of a dual mode scramjet engine isolator and combustor sections in accordance with the present invention;
FIG. 3 is a schematic representation of an annular isolator scramjet engine including a cutaway view of a notional inlet (shown with dotted lines);
FIG. 4 illustrates a centerbody that may be used in the dual mode scramjet engine of FIG. 2;
FIGS. 5A and 5B illustrate the benefits of an annular isolator scramjet engine including reduced length and reduced heat load due to reduced combustor surface area.

### DETAILED DESCRIPTION OF THE PREFERRED EMBODIMENT(S)

Recent research in the aerospace community has focused on axisymmetric scramjet engines since they hold promise for reducing engine weight, largely due to the high structural efficiency of circular cross section structures. One of the challenges of designing axisymmetric scramjet engines is achieving adequate fuel penetration and mixing in a circular duct. In a rectangular duct, the aspect ratio of the rectangle can be controlled so that for a given cross sectional area, fuel penetration can always be achieved by injecting across the short side of the rectangle. With a circular duct, the fuel penetration distances are going to be larger than a rectangular duct with an equivalent cross sectional flow area since there is no "short side" of a circle. As a result, axisymmetric combustor designs typically require longer lengths to mix and burn than equivalent rectangular cross section engines. While axisymmetric engines may be lighter per unit length, additional length requirements for mixing and burning can offset most or all of the weight benefits.

Another issue related to axisymmetric scramjets is scaling. A small scale prototype engine may be developed and demonstrated with testing, but as the engine is scaled to larger sizes, the fuel penetration requirements can exceed injector capability, especially if the fuel is injected from the wall of the duct. While instream injectors, i.e. rambars, can be used to mitigate the penetration issue, they can also introduce substantial flow losses as well as added complexity and cost. The ability to scale an engine across a large range of thrust requirements reduces development costs and risk by enabling re-use across various applications. It also enables re-use for single application by enabling use of a single architecture across the different stages of the product life cycle, from subscale testing all the way up to a full scale operational system.

The present invention in its preferred embodiments provides the following improvements compared to the existing state of the art: (1) compact flowpath (25% reduction in isolator/combustor length) which contributes to reduced vehicle volume and weight through more efficient packaging; (2) excellent scalability enabling tuning of the mixing scales across a broad range of engine sizes; (3) enhanced flameholding for low speed operability; and (4) reduced combustor heat load which can lead to higher Mach number and range when using hydrocarbon fuels.

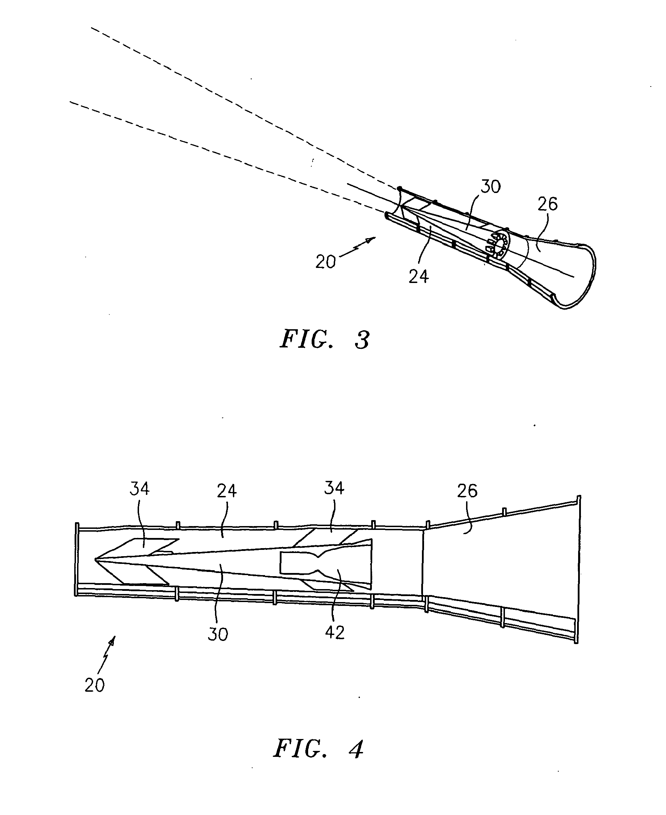

A preferred embodiment of scramjet engine 20 in accordance with the present invention consists of an isolator 24 and a combustor 26. The isolator 24 is a circular cross section duct at an interface with an inlet. The isolator 24 transitions to an annular cross section at an interface with the combustor 26. This is achieved by introducing a centerbody 30 into the isolator 24. FIGS. 2 and 3 show the scramjet engine 20. These figures show a conical shape, although other shapes are possible. The isolator and combustor 26 should be connected to an inlet upstream of the isolator 24, and a nozzle downstream of the combustor 26. The inlet and nozzle are not shown in the figures.

The centerbody 30 includes ramp injectors 32 on the downstream end to enhance mixing. Struts 34 secure the centerbody 30 to the isolator 24 and provide access for fuel lines. The centerbody 30 ends at the entrance to the combustor 26. The combustor 26 has a circular cross section with no centerbody. While the example shows a circular cross section, other shapes, such as elliptical cross sections, are possible.

Some or all of the fuel may be injected from the centerbody 30 and outer wall 40 near the entrance to the combustor 26. The base area of the centerbody 30 acts as a flameholder. The ramps 32 shown on the centerbody 30 enhance fuel/air mixing. Additional fuel injection may take place in downstream portions of the combustor 26 during ramjet operation.

The centerbody base area/flameholder provides unique capabilities relative to previous designs. The height of a flameholder determines the operability of the engine, i.e. the ability to maintain burning in the combustor 26, at low speed with larger being better, while the base area influences high speed combustor performance. The base area needs to fall within a certain range to achieve good scramjet performance. Previous scramjet designs have used ramp injectors on the outer wall and wall steps for flameholders. For a given base area, wall mounted flameholders reduce flameholder height by a factor of two or more relative to the centerbody design. For hydrocarbon fuels, this leads to the inability to keep the flame lit at low Mach numbers in the combustor without introducing active ignitions devices, such as hot gas, ignition torches, etc., resulting in higher complexity and cost. The centerbody design also results in large reductions in jet penetration requirements relative to a circular duct configuration, since the jet needs to only penetrate across the gap height rather than the entire duct radius.

Additional features which can be incorporated into the flowpath include a variable geometry centerbody (not shown) or rocket engines 42. The centerbody 30 can be fixed or axially translatable. Translating the centerbody 30 can provide additional compression when operating in scramjet mode, while maintaining a near constant area isolator during ramjet mode. The centerbody 30 is also of an ideal configuration to house an axisymmetric rocket engine 42, providing a natural rocket based combined cycle opportunity as shown in FIG. 4. This provides a more efficient rocket based combined cycle (RBCC) integration compared to past efforts that proposed to house a number of smaller rockets into a single flowpath. The rocket engine 42 may be a single standard shaped bell nozzle rocket engine.

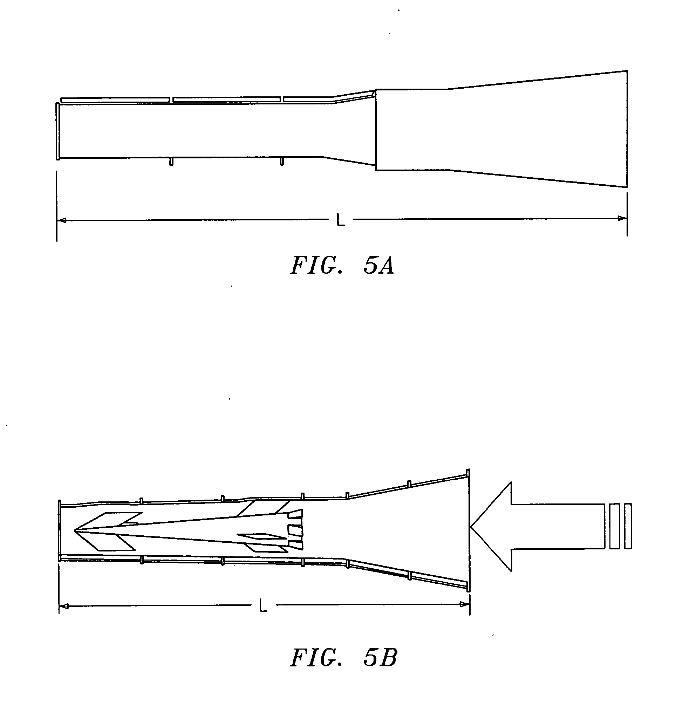

The feature which distinguishes the present invention from prior art scramjet engines is the unique centerbody configuration that is used only in the isolator, as opposed to prior art designs that use the centerbody throughout the entire flowpath for annular flows, or not at all for circular duct flowpaths. The current invention eliminates the centerbody aft of the isolator to reduce combustor surface area, heat load, and weight. The centerbody geometry has been chosen to achieve a desirable area ratio at the combustor entrance. Compared to circular duct geometries that do not have a centerbody, the current invention reduces length significantly while also reducing combustor heat load due to reduced combustor surface area. See FIGS. 5A and 5B. The combustor surface area may be reduced by approximately 22% resulting in the high heat transfer combustor area being shifted to the cooler isolator. The total engine surface area remains unchanged.

The centerbody 30 also provides significant low speed operability advantages due to the large centerbody step height. The unique centerbody configuration also enables integration of an axisymmetric rocket 42 in the flowpath.

The dual mode scramjet engine of the present invention may be used to propel a wide variety of vehicles in a wide variety of environments.

It is apparent that there has been described above an annular isolator dual mode scramjet engine which fully satisfies the objects, means, and advantages set forth hereinbefore. While the present invention has been described in the context of specific embodiments thereof, other unforeseeable alternatives, modifications, and variations may become apparent to those skilled in the art having read the foregoing description. Accordingly, it is intended to embrace those alternatives, modifications, and variations as fall within the broad scope of the appended claims.

## Claims

1. A dual mode scramjet engine (20) comprising:
an isolator (24) that serves to minimize combustor influence on inlet operation;
a combustor (26) for operation in both ramjet and scramjet mode; and
a centerbody (30) positioned within said isolator (24), said centerbody (30) having an end at an entrance to the combustor (26).

2. The scramjet engine according to claim 1, wherein said isolator (24) is annular.

3. The scramjet engine according to claim 1 or 2, further comprising said isolator (24) having an outer wall (40) and a plurality of struts (34) for connecting said centerbody (30) to said outer wall (40).

4. The scramjet engine according to any preceding claim, wherein said centerbody (30) has means for enhancing mixing at a downstream end.

5. The scramjet engine according to claim 4, wherein said enhancing means comprises a plurality of ramp injectors (32).

6. The scramjet engine according to any preceding claim, wherein said centerbody (30) has a conical shape.

7. The scramjet engine according to any of claims 1 to 3, wherein said centerbody (30) is conically shaped and has a plurality of ramp injectors (32) at a downstream end.

8. The scramjet engine according to claim 7, wherein said combustor has a circular cross section and said isolator is annular.

9. The scramjet engine according to any preceding claim, wherein said isolator (24) has a circular cross section at an interface with an inlet.

10. The scramjet engine according to claim 9, wherein said isolator (24) transitions to an annular cross section at an interface with said combustor (26).

11. The scramjet engine according to any preceding claim, wherein said combustor (26) has a circular cross section.

12. The scramjet engine according to any preceding claim, wherein said centerbody (30) is fixed.

13. The scramjet engine according to any of claims 1 to 11, wherein said centerbody (30) is axially translatable.

14. The scramjet engine according to any preceding claim, wherein said centerbody (30) houses an axisymmetric rocket engine (42).

15. The scramjet engine according to any preceding claim, wherein said centerbody houses a single bell nozzle rocket engine (42).
